Europäisches Patentamt

European Patent Office

Office européen des brevets

(11) Veröffentlichungsnummer: **0 085 965**

**A1**

(12) **EUROPÄISCHE PATENTANMELDUNG**

(21) Anmeldenummer: **83101072.3**

(22) Anmeldetag: **04.02.83**

(51) Int. Cl.³: **B 60 P 7/08**

(30) Priorität: **04.02.82 DE 3203750**

(43) Veröffentlichungstag der Anmeldung:
**17.08.83 Patentblatt 83/33**

(84) Benannte Vertragsstaaten:
**AT BE CH DE FR GB IT LI LU NL SE**

(71) Anmelder: **Walraf Gurten-Bandweberei GmbH & Co.,**
**KG**
**Dorfbroicher Strasse 53-55**
**D-4050 Mönchengladbach 2(DE)**

(72) Erfinder: **Rutzki, Edith**
**Wilhelmstrasse 23**
**D-6901 Dossenheim/Heidelberg(DE)**

(74) Vertreter: **Diehl, Hermann O., Dr. et al,**
**Diehl & Kressin Flüggenstrasse 17**
**D-8000 München 19(DE)**

(54) Spannschloss für Gurtbänder.

㊲ Ein Spannschloß (1) für Gurtbänder (2), insbesondere für Lastsicherungssysteme, enthält eine Befestigung für das Festende des Gurtbandes und eine von einer Spannratsche betätigbare Gurttrommel (28), welche das Gurtband (2) nach dem Windenprinzip spannt und in lösbarem Eingriff mit einer Sperrklinke (23) steht. Die Spannratsche enthält eine seitlich an der Gurttrommel (28) angebrachte Zahnung (38,39) mit der eine am Ratschenhebel (42) befestigte, in Richtung auf die Gurttrommel (28) federnd vorgespannte Eingriffsklinke (58) in Wirkverbindung bringbar ist. Der Ratschenhebel (42) enthält des weiteren Mittel, welche das auf die Zahnung (38,39) bei Betätigung des Ratschenhebels (42) übertragbare Drehmoment begrenzen. Dies geschieht dadurch, daß die Eingriffsklinke (58) tangential zur Gurttrommel (28) verschiebar gelagert und in Spannrichtung tangential zur Gurttrommel (28) federnd vorgespannt wird. Gemäß einer alternativen Ausgestaltung ist der Ratschenhebel (42) in Längsrichtung unterteilt, wobei beide Teile über einen Mechanismus verbunden sind, der bei Überschreiten eines vorbestimmten von dem freien Ende des Ratschenhebels (42) ausgeübten Drehmoments ein Abknicken des Ratschenhebels (42) bewirkt. Das Spannschloß (1) ist zum Austausch von Bauelementen einfach zerlegbar.

Fig. 5

EP 0 085 965 A1

B e s c h r e i b u n g

Die Erfindung betrifft ein Spannschloß für Gurtbänder, insbesondere für Lastsicherungssysteme, mit einer Befestigung für das Festende des Gurtbands und mit einer von einer Spannratsche betätigbaren Gurttrommel, welche das Gurtband nach dem Windenprinzip spannt und in lösbaren Eingriff mit einer Sperrklinke steht.

Es hat sich gezeigt, daß die Gurtbänder von Lastsicherungssystemen, wenn sie mit einem derartigen Spannschloß angezogen werden, vielfach zu locker oder zu straff angezogen sind, was im einen Falle zum Verrutschen der Ladung im anderen Falle zu einer Beschädigung derselben oder zum Zerreissen der Gurtbänder führen kann.

Der vorliegenden Erfindung liegt daher die Aufgabe zugrunde, ein Spannschloß der eingangs beschriebenen Art zu schaffen, bei dem das auf die Gurttrommel beim Spannen ausgeübte Drehmoment auf ein en maximalen Wert begrenzt ist, so daß der Spannvorgang jeweils bis zum Erreichen dieses Drehmoment durchgeführt werden kann. Diese Aufgabe wird erfindungsgemäß dadurch gelöst, daß die Spannratsche eine seitlich an der Gurttrommel angebrachte Zahnung enthält, mit der eine am Ratschenhebel befestigte, vorzugsweise radial in Richtung auf die Achse der Gurttrommel federnd vorgespannte Eingriffsklinke in Wirkverbindung bringbar ist,und daß der Ratschenhebel Mittel enthält, welche das auf die Zahnung bei Betätigung des Ratschenhebels übertragbare Drehmoment begrenzen. Die erfindungsgemäße Ausgestaltung des Spannschlosses liefert eine robuste und einfache Konstruktion die auch unter erschwerten Bedingungen sicher einsetzbar ist.

Gemäß einer ersten Ausführungsform des Spannschlosses ist die Eingriffsklinke tangential zur Gurttrommel verschiebbar gelagert und in Spannrichtung tangential zur Gurttrommel federnd vorgespannt, so daß bei Überschreiten eines von dem Ratschenhebel auf die Gurttrommel ausgeübten Drehmomentes die Eingriffsklinke nachgibt und über die Zahnung an der Gurttrommel gleitet, ohne diese weiter mitzunehmen. Unter dem Begriff Spannrichtung wird diejenige Richtung verstanden, bei welcher die Gurttrommel gedreht und das Gurtband gespannt werden, wenn der Ratschenhebel in diese Richtung bewegt wird. Zweckmäßigerweise ist die Vorspannung der zumindest einen Feder, mit welcher die Eingriffsklinke tangential zur Gurttrommel vorgespannt wird, einstellbar. Es ist besonders zweckmäßig, wenn die Drehachse des Ratschenhebels und der Gurttrommel zusammenfallen, weil sich dann definierte Bedingungen für den gesamten Spannbereich ergeben.

Gemäß einer weiteren besonders bevorzugten Ausführungsform ist der Ratschenhebel in Längsrichtung unterteilt, wobei die beiden Teile über einen bei Überschreiten eines vorbestimmten, von dem freien Ende des Ratschenhebels ausgeübten Drehmoments ein Abknicken des Ratschenhebels bewirkenden Mechanismus verbunden sind. Das Erreichen des maximalen Drehmoments wird hierdurch dem Benutzer besonders deutlich durch das Abknicken angezeigt, so daß dieser keine weiteren vergeblichen Versuche unternimmt das Gurtband mittels des Spannschlosses weiterzuspannen.

Der der Gurttrommel zugekehrte Teil des Ratschenhebels ist zweckmäßigerweise zumindest gleich lang, vorzugsweise bis zu 20 % länger ausgebildet, als der der Gurttrommel abgekehrte Teil derselben.

Als zweckmäßig hat es sich erwiesen, wenn der Ratschenhebel aus zwei quer zur Gurttrommel zumindest um die Gurtbreite beabstandeten Schenkeln besteht, die an ihren freien Enden mittels eines Handgriffes und im Bereich der Unterteilung mittels des Mechanismusses zur Begrenzung des Drehmoments verbunden sind.

Der Mechanismus enthält gemäß einer besonders bevorzugten Ausführungsform eine Achse, die starr mit dem äusseren Teil des Ratschenhebels verbunden ist und in einem Bereich einen Mehrkantquerschnitt aufweist, in dem sie eine Hülse längsverschieblich aufnimmt. Die Hülse ist in einer Richtung vorgespannt und enthält an ihrem in Vorspannungsrichtung gelegenen Ende eine Zahnung, welche aufgrund der Vorspannung in Eingriff mit einer entsprechenden gegenüberliegenden Zahnung eines mit dem inneren Teil des Ratschenhebels starr verbundenen Gegenelement gehalten ist, so daß bei Überschreiten des kritischen Drehmoments, die beiden Teile des Ratschenhebels abknicken, indem die Zahnungen sich gegeneinander verschieben.

Das Gegenelement ist zweckmäßigerweise über eine Mehrkantsteckverbindung an dem inneren Teil des einen Schenkels befestigt. Als vorteilhaft hat es sich erwiesen, wenn es eine Rohrhülse trägt, die bis zu den gegenüberliegenden Schenkeln reicht und eine Feder einschließt, welche die Hülse in Richtung auf das Gegenelement vorspannt.

Zweckmäßigerweise ist die Feder so ausgebildet, daß sie die Achse umgibt. Indem die Rohrhülse an ihrem dem Gegenelement abgekehrten Ende mit einem in ihre Längsrichtung verschiebbaren und arretierbaren Widerlager für die Feder versehen ist, läßt sich die Federvorspannung und damit die Größe des auf die Gurttrommel übertragbaren Drehmoments einstellen.

Gemäß einer besonders vorteilhaften Weiterbildung der Erfindung ist eine akustische Anzeige vorgesehen, welche bei Überschreiten des eingestellten maximalen Drehmoments betätigt wird. Die akkustische Anzeige enthält zweckmäßigerweise eine Glocke, die durch Verschieben der Hülse betätigbar ist. Als zweckmäßig hat es sich erwiesen, wenn die Glocke aus einem federnd mit der Hülse verbundenen Klöppel besteht der gegen einen zwischen den Schenkel des Ratschenhebels angeordneten Schallkörper anschlägt, der dem Mechanismus zum Abknicken des Ratschenhebels günstigerweise als Gehäuse umgibt. Es ist besonders praktisch wenn der Schallkörper konzentrisch zur Achse angeordnet ist und ein radial abstehendes Eingriffselement enthält, das dem Klöppel gegenüberliegt. Der Schallkörper ist mit Vorteil an dem einen Schenkel des Ratschenhebels befestigt. Um die Rückstellung des Ratschenhebels nach einem Abknicken beim Überschreiten des maximalen Drehmoments zu vereinfachen, werden die in Spannrichtung wirksamen Flanken der Zahnung steiler als die in Gegenrichtung wirksamen Flanken ausgebildet.

Da bei einem Einsatz des Spannschlosses unter erschwerten Bedingungen eine Beschädigung einzelner Teile oft nicht vermeidbar ist zielt die Erfindung des weiteren darauf ab, das Spannschloß derart auszugestalten, daß seine Teile leicht auszuwechseln sind. Besonders bei einem militärischen Einsatz des Spannschlosses ist dies von besonderer Bedeutung. Zu diesem Zwecke wird gemäß einer besonderen Ausführungsform die Gurttrommel aus zumindest zwei stabförmigen Elementen gebildet, die an beiden Enden in Durchbrüchen von Scheiben derart gehalten sind, daß ihre Außenflächen einen Kreiszylinder berühren, wobei zwischen den Elementen zumindest in dem von den Scheiben begrenzten Bereich ein zwei Mantellinien des Kreiszylinders verbindender Spalt entsteht, durch welchen das Gurtband eingefädelt werden kann. Die stabförmigen Elemente sind zweckmäßigerweise mit einer kreiszylindersegmentartigen Außenfläche versehen und so gehaltert, daß diese Außenflächen auf einem Kreiszylinder um die Drehachse der Gurttrommel liegen. Die Elemente sind zweckmäßigerweise zwei im Querschnitt kreissegmentartige und an den Enden abgerundete Zylinder wobei jedes der Segmente bezogen auf die Drehachse der Gurttrommel einen Winkel von etwa 140 bis 160° hat, vorzugsweise von etwa 150° einnimmt. Zumindest eine der Scheiben, welche die stabartigen Elemente haltert, vorzugsweise beide sind mit der Zahnung versehen, über welche der Ratschenhebel die Gurttrommel dreht.

Eine besonders einfache Konstruktion ergibt sich, wenn man die Außenflächen der stabförmigen Elemente in zwei miteinander fluchtenden quer zur Längsrichtung des Gurtbandes gerichteten Bohrungen des die Bauelemente des Spannschloß halternden Rahmens drehbar lagert. Die stabförmigen Elemente sind dabei zweckmäßigerweise außerhalb der Bohrungen durch einen lösbaren Splint gesichert, der an einem Herausrutschen durch einen Federring gehin-

dert ist.

Die Konstruktion vereinfacht sich des weiteren, wenn die Schenkel des Ratschenhebels mit Bohrungen versehen sind, deren Durchmesser dem Durchmesser des von den Außenflächen der stabförmigen Elemente festgelegten Kreiszylinders entsprechen. Die Schenkel des Ratschenhebels werden über diese Bohrungen auf die stabförmigen Elemente aufgesteckt, so daß der Ratschenhebel um die Drehachse der Gurttrommel verschwenkbar ist.

Eine besonders kompakte Bauweise ergibt sich, wenn die Scheiben außerhalb der Bohrungen im Rahmen, und die Schenkel des Ratschenhebels außerhalb der Scheiben auf den stabförmigen Elementen angeordnet sind.

Zweckmäßigerweise besteht der Rahmen aus einem U-Profilblech, das an dem einen Ende zwischen den U-Schenkeln die Befestigung für das Festende des Gurtbandes trägt und an dem entgegengesetzten Ende der U-Schenkel die Bohrungen für die Lagerung der stabförmigen Elemente enthält.

Der Rahmen kann mit Nockenflächen versehen sein, welche die Eingriffsklinke des Ratschenhebels nach einer definierten Spannbewegung von etwa 120$^{o}$ gemessen von ihrer Ausgangslage aus dem Eingriff mit der Zahnung bei einer weiterführenden Verschwenkung herausführt. Die Gurttrommel wird hierdurch einfach freigesetzt, wenn dies erwünscht ist.

Es ist des weiteren zweckmäßig, wenn die Eingriffsklinke in Längsschlitzen der Schenkel des Ratschenhebels geführt ist und außen an den Schenkeln herabragende Haken enthält, welche bei geschlossenem Spannschloß hinter der Sperrklinke einrasten und die Sperrklinke als zusätzliche Sicherung gegen ein unbeabsichtigtes Öffnen in Sperrichtung drücken. Auch die federbelastete Sperrklinke ist zweckmäßigerweise in Längsschlitzen des Rahmens geführt und zwar bezüglich der
Gurttrommel auf der der Befestigung für das Festende
zugekehrten Seite. Die Sperrklinke steht dabei zweckmäßigerweise seitlich über den Rahmen vor, so daß eine an zumindest einem Schenkel des Ratschenhebels auf
seiner bezüglich der Drehachse dem Handgriff abgekehrten Seite angebrachte Nockenfläche die Sperrklinke
aus ihrem Eingriff mit der Zahnung herausdrängen kann,
wenn das Spannschloß seine maximale Offenstellung einnimmt. Eine besonders einfache Bedienung ergibt sich,
wenn die Eingriffsklinke mit einem Betätigungsgriff
versehen ist, der zumindest bis zur Oberkante des
Ratschenhebels hinaufragt. Dies vereinfacht es, den
Haken aus der Anlage an der Sperrklinke freizusetzen,
um das Spannschloß zu öffnen.

Die beiliegende Zeichnung bevorzugter Ausführungsbeispiele dient der weiteren Erläuterung der Erfindung.

Die beiliegenden Zeichnungen dienen der weiteren Erläuterung der Erfindung.

Fig. 1 zeigt ein Ausführungsbeispiel des Spannschlosses
in Seitenansicht und dessen Verwendung zum Festzurren von quaderförmigen Gegenständen auf einer
Palette.

Fig. 2 zeigt in Seitenansicht das Spannschloß von Fig. 1
in vergrößertem Maßstab, wobei das Spannschloß
in gespanntem Zustand ist.

Fig. 3 zeigt eine weitere Seitenansicht des Spannschlosses
von Fig. 1 in teilgebrochener Seitenansicht während
des Spannvorgangs.

Fig. 4 zeigt das Spannschloß von Fig. 1 ebenfalls in teilgeschnittenem Zustand und gegenüber den Darstellungen
von Fig. 2 und 3 in verkleinertem Maßstab
in der Offenstellung, bei welcher das Gurtband entspannt ist.

Fig. 5 zeigt eine Draufsicht in Richtung des Pfeiles V
von Fig. 4 auf das dort dargestellte Spannschloß
in einer Stellung, bei der das Gurtband entspannt
ist.

Fig. 6 zeigt einen Längsschnitt längs der Linie VI-VI
von Fig. 4 durch einen an dem Ratschenhebel angebrachten Mechanismus zur Drehmomentbegrenzung, der
ein äußeres und ein inneres Teil des Ratschenhebels
miteinander verbindet.

Fig. 7 zeigt in schematischer Darstellung ein Beispiel für die Rast-Verzahnung des in Fig. 6 gezeigten Mechanismus bei der die aufsteigenden und absteigenden Zahnflanken den gleichen Winkel haben.

Fig. 8 zeigt in schematischer Darstellung ein weiteres Ausführungsbeispiel für die Rast-Verzahnung des in Fig. 6 gezeigten Mechanismus, bei der die aufsteigenden und die absteigenden Zahnflanken einen unterschiedlichen Winkel haben, so daß bei der Rückstellung des Ratschenhebels eine kleinere Kraft aufzuwenden ist.

Fig. 9 zeigt eine Seitenansicht entsprechend derjenigen von Fig. 3 von einem weiteren Ausführungsbeispiel des Spannschlosses, bei welchem als Mittel zur Drehmomentbegrenzung Federn vorgesehen sind, welche der Eingriffsklinke des Ratschenhebels eine elastische Vorspannung in bezüglich der Gurttrommel tangentialer Richtung erteilen.

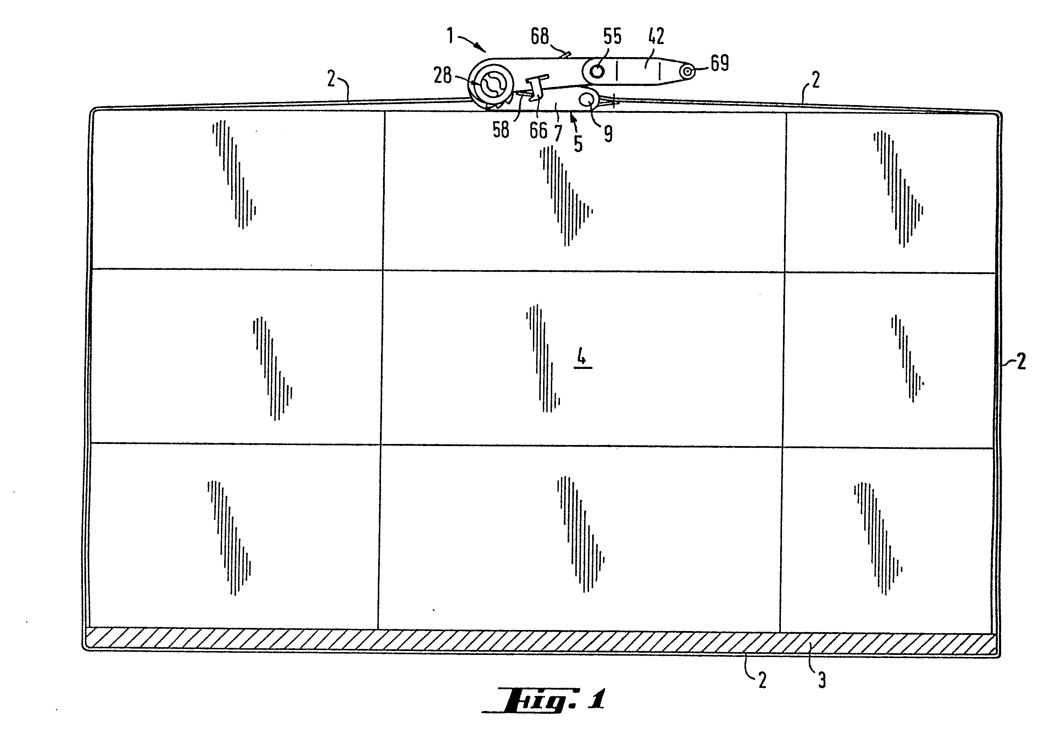

In Fig. 1 ist ein Spannschloß 1 dargestellt, welches die Enden eines Gurtbandes 2 zusammenhält, das im dargestellten Falle um eine Palette 3 und einen Stapel auf dieser angebrachter quaderförmige Gegenstände 4 herumgelegt ist und diese sichert. Das Spannschloß 1 besteht aus einem Rahmen 5 aus einem U-Profilblech mit einer relativ kurzen Basis 6 und zwei nach vorne und rückwärts über diese vorstehenden U-Schenkeln 7 und 8. Am einen Ende der U-Schenkel ist über miteinander fluchtende Bohrungen ein Steg 9 eingesetzt, der an seinem einem Ende einen Flansch 10 trägt mit dem er an der Außenkante des U-Schenkels 7 anliegt und der an seinem anderen Ende eine quer zu seiner Längsachse verlaufende Bohrung enthält, in die ein Splint 11 einführbar ist, nachdem über das freie Ende eine außen an dem U-Schenkel anliegende Beilagscheibe 12 aufgeschoben ist. Der Steg 9 bildet die Befestigung für das Festende 13 des Gurtbandes 2.

An den entgegengesetzten Enden der U-Schenkel 7 und 8 sind miteinander fluchtende bogenkreisförmige Bohrungen 14 und 15 vorgesehen, deren Durchmesser dem Durchmesser der Gurttrommel entspricht und deren Mittelpunkte die Drehachse derselben festlegen. Die Bohrungen 14, 15 liegen höher als die Bohrungen zur Aufnahme des Steges 9, wobei ihre Unterkante etwa in Höhe des Mittelpunkts des Steges 9 liegt. Die Höhe der U-Schenkel 7 und 8 nimmt daher zu von dem rückwärtigen Ende, an dem die Befestigung für das Festende 13 des Gurtbandes 2 angebracht ist, bis zu dem vorderen Ende, an dem die Bohrungen 14 und 15 gelegen sind, wobei die vorderen Stirnflächen Nockenflächen 16 und 17 festlegen, die nach einem im wesentlichen radial zur Drehachse D-D etwa über dem vorderen Rand der Bohrungen 14 und 15 gelegenen Anstiegsbereich 18 kreisbogenförmig um die Drehachse D-D als Mittelpunkt bis zur Unterkante des Rahmens 5 verlaufen, wobei in diesem Bereich etwa in gleicher Höhe wie die Drehachse je eine Nut 19 und 20 vorgesehen ist.

Die Basis 6 trägt an ihrem rückwärtigen Ende etwa mittig zwischen dem U-Schenkeln 7 und 8 eine nach oben gerichtete Abbiegung 21 an der sich eine Feder 22 abstützt, welche eine Sperrklinke 23 in Richtung auf die Bohrungen 14 und 15 drängt. Die Sperrklinke 23 ist in Schlitzen 24, 25 geführt, welche in den U-Schenkeln 7 und 8 angebracht sind und in radialer Richtung zu den Bohrungen 14 und 15 verlaufen, sowie im Abstand von diesen enden. Von dem rückwärtigen etwa den Abstand der Schenkel 7, 8 ausfüllenden Bereich der Sperrklinke 23 stehen flügelartige Fortsätze 27 und 28 ab, welche durch die Schlitze 24 und 25 nach außen ragen und deutlich über diese vorstehen. Die Vorderkanten der flügelartigen Fortsätze 27 und 28 und auch deren rückwärtige Kanten verlaufen senkrecht zu den U-Schenkeln 7 und 8. Die Schlitze 24 und 25 und die Sperrklinke 23 sind so dimensioniert, daß die Sperrklinke 23 durch die Schlitze in den Rahmen 5 einführbar ist.

Die Gurttrommel 28 wird von zwei zylindrischen im Querschnitt kreisringsegmentartig und an den Enden abgerundeten Zylindern 29 und 30, deren Außenflächen Kreiszylindersegmente mit einem Radius sind, der dem Radius der Bohrungen 14 und 15 entspricht. Die Zylinder 29 und 30 sind länger als der Abstand der U-Schenkel 7 und 8 und können lose durch diese hindurchgesteckt werden. Zwei Kreisscheiben 31 und 32 sind mit der Querschnittsfläche der Zylinder entsprechenden kreisringsegmentartigen Durchbrüchen 33 und 34 versehen, welche mit ihren Außenrändern auf einem Kreis angeordnet sind, dessen Durchmesser dem Radius der Bohrungen 14 und 15 entspricht, wobei die Durchbrüche 33 und 34 des weiteren bezüglich dieses Kreises einander diametral gegenüberliegen. Die Kreisscheiben 31 und 32 werden auf die Zylinder 29 und 30 in engem Paßsitz außerhalb der U-Schenkel 7 und 8 auf deren freien Enden aufgesteckt. Hierdurch wird erreicht, daß sich die Zylinder 29 und 30 mit ihren Außenflächen an den Rändern der Bohrungen 14 und 15 anlegen, welche auf diese Weise eine schwenkbare Lagerung für die Gurttrommel bilden. Zweckmäßigerweise sind zwischen den U-Schenkeln 7 und 8 und den Kreisscheiben 31 und 32 federnde Beilagscheiben angebracht, welche verhindern, daß die Kreisscheiben an den U-Schenkeln schleifen. Zwischen den Zylindern 29 und 30 entsteht in dem von den U-Schenkeln 7 und 8 eingeschlossenen Bereich ein durchgehender Spalt 35, durch welchen ein loses Ende 37 des Gurtbandes zu Beginn des Spannvorganges hindurchgeschoben werden kann. Die Kreisscheiben 31 und 32 sind auf ihrem radialen Stirnflächen mit einer Zahnung 38, 39 versehen, welche die Ratschenzahnung bilden. Die der Sperrklinke 23 zugekehrten Zahnflanken 40 verlaufen steil und im wesentlichen radial zu der Drehachse D-D. Die der Sperrklinke abgekehrten Zahnflanken 41 verlaufen dagegen flach mit einer deutlich tangential zur Gurttrommel verlaufenden Richtungskomponente. Um die Drehachse D-D ist des weiteren ein Ratschenhebel 42 verschwenkbar gelagert. Der Ratschenhebel 42 besteht aus zwei mit ihren inneren Enden über Bohrungen 43, 44 auf die Zylinder 29 und 30 außerhalb der Kreisscheiben 31 und 32 aufgesteckten Schenkeln 47 und 48, wobei zwischen diesen und den Kreisscheiben 31 und 32 Federscheiben 45 und 46 eingefügt sind. Die Bohrungen 43 und 44 sind dabei derart gewählt, daß der Ratschenhebel 42 auf den Außenflächen der Zylinder 29 und 30 gleitend verschiebbar gelagert ist. Beilagscheiben 49 und 50 sind anschließend an die freien Enden der Zylinder 29 und 30 angesteckt. Außerhalb der Beilagscheiben 49 und 50 ist ein Sicherungssplint 52 durch an den freien Enden 29 und 30 angebrachte radial verlaufende miteinander fluchtende Durchgangsbohrungen hindurchgeführt. Der Sicherheitssplint ist an seinem rückwärtigen Ende mit einem Kopf 53 versehen an den die Enden eines Federrings 54 befestigt sind, welcher derart dimensioniert ist, daß er wie in den Figuren dargestellt, über dem den Kopf 53 abgekehrten Zylinder aufgespreizt werden kann.

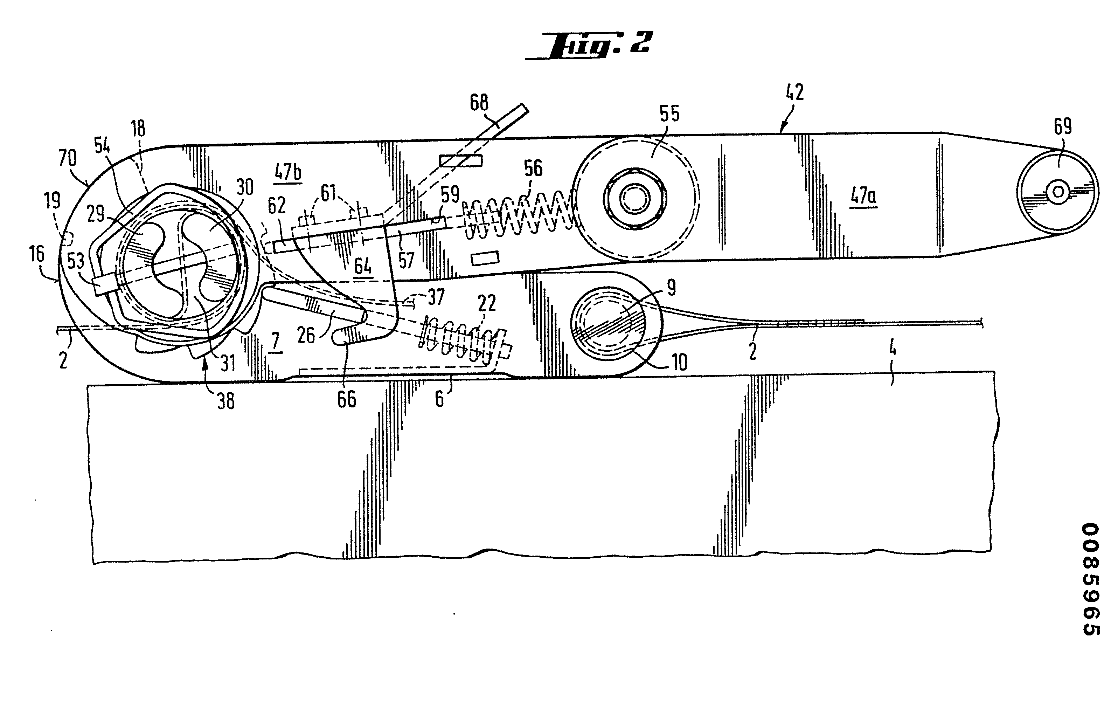

Der Ratschenhebel 42 ist längsmäßig unterteilt, wobei der Schenkel 47 aus einem äußeren Teil 47a und einem inneren Teil 47b und der Schenkel 48 aus einem äußeren Teil 48a und einem inneren Teil 48b besteht. Die inneren Teile der Schenkel 47b und 48b, welche in der vorstehend beschriebenen Weise um die Drehachse D-D der Gurttrommel 28 schwenkbar gelagert sind, verlaufen parallel zueinander. An ihren freien Enden ist zwischen ihnen ein im folgenden noch näher erläuterter Mechanismus 55 angebracht, der die freien Enden der inneren Teile 47b und 48b mit den inneren Enden der äußeren Teile 47a und 48a des Ratschenhebels 42 derart verbindet, daß bis zum Erreichen eines bestimmten von dem Ratschenhebel 42 ausgeübten Drehmoments eine starre Verbindung zwischen den inneren und äußeren Teilen 47a und 47b bzw. 48a und 48b hergestellt ist, während bei einem Überschreiten dieses Drehmoment die äußeren Teile 47a bzw. 47b gegenüber den inneren Teilen 47b bzw. 48b umklappen. An dem Mechanismus 55 stützt sich eine Feder 56 ab, welche auf einen rückwärtigen Eingriffsbereich 57 einer Eingriffsklinke 58 eine Vorspannung ausübt und die Eingriffsklinke 58 in Richtung auf die Gurttrommel 28 vorspannt. In den inneren Teilen 47b und 48b des Ratschenhebels 42 sind Längsschlitze 59 und 60 derart angebracht, daß diese jeweils radial in Richtung zur Drehachse D-D verlaufen, gleichgültig welche Lage der Ratschenhebel 42 jeweils einnimmt. Der mit der Feder 56 verbundene rückwärtige Eingriffsbereich 57 der Eingriffsklinke 58 ist über Schrauben 61 lösbar mit zwei rechtwinklig abgebogenen Winkelstücken 62 und 63 verbunden, welche an ihren vorderen Enden je ein etwa parallel zur Drehachse D-D verlaufenden Eingriffsbereich aufweisen, dessen Außenkanten innerhalb der Schenkel 47 und 48 liegen und die durch die Kraft der Feder 56 im Eingriff mit der Zahnung 38 der Gurttrommel 28 oder in Anlage an den Nockenflächen 17 und 18 stehen bzw. in der darin angebrachten Nut 19 bzw. 20 aufgenommen sind. Die Winkelstücke 62 und 63 erstrecken sich mit seitlichen Ansätzen durch die Schlitze 59 und 60, wobei diese Ansätze außerhalb dieser Schlitze die um 90$^\circ$ aus der Sicht von Fig. 2 nach unten abgebogenen Bereiche 64 und 65 tragen, welche benachbart zu der Außenwandung der Schenkel 47 und 48 und parallel zu dieser verlaufen. Die abgebogenen Bereiche tragen an ihren aus der Sicht von Fig. 2 unteren Enden Haken 66 und 67, welche in Richtung auf die Gurttrommel 28 weisen. Ein aus der Sicht von Fig. 2 nach oben abgebogener Handgriff 68 ist ebenfalls über die Schrauben 61 mit der Eingriffsklinke 58 verbunden. Er erlaubt ein einfaches Zurückziehen der Eingriffsklinke 58 gegen die Kraft der Feder 56.

Im Bereich der äußeren Teile 47a und 48a sind die Schenkel 47 und 48 nach außen gebogen, um einen ausreichenden Raum für die Hand einer Bedienungsperson zu schaffen, welche einen Verbindungssteg 69 ergreift, der die äußersten Enden der Schenkel 47 und 48 verbindet.

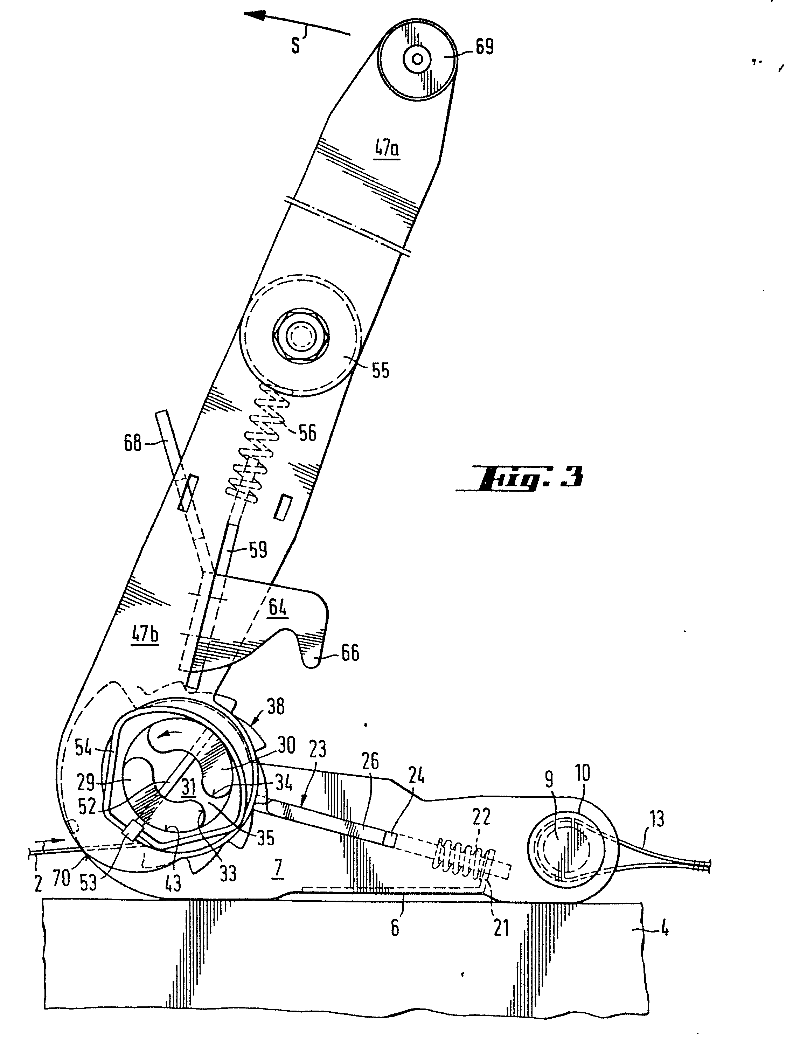

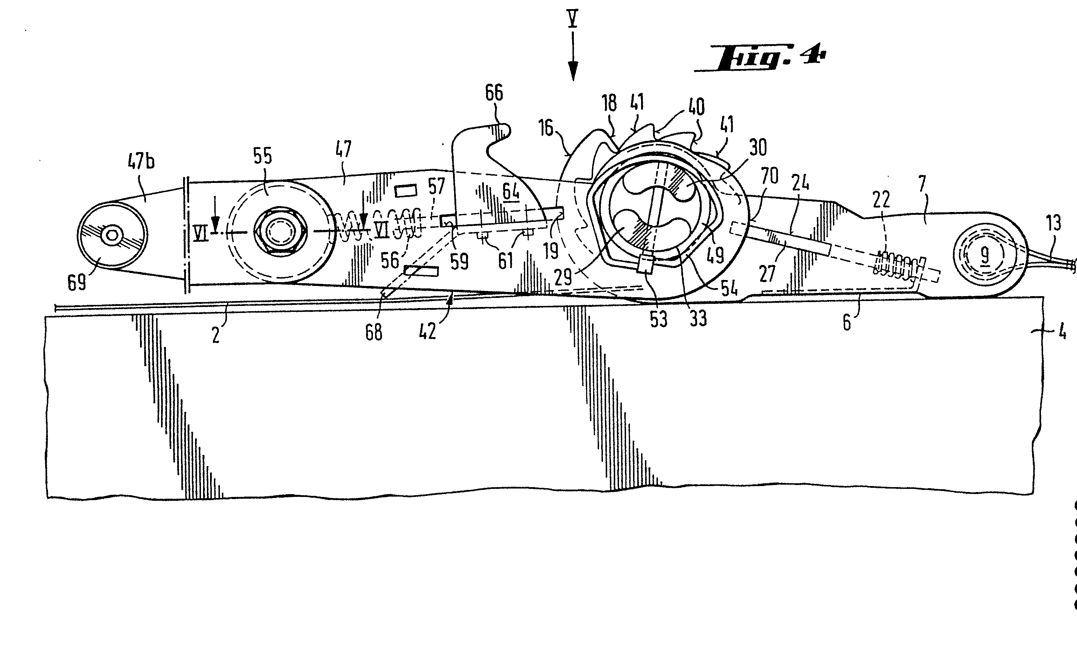

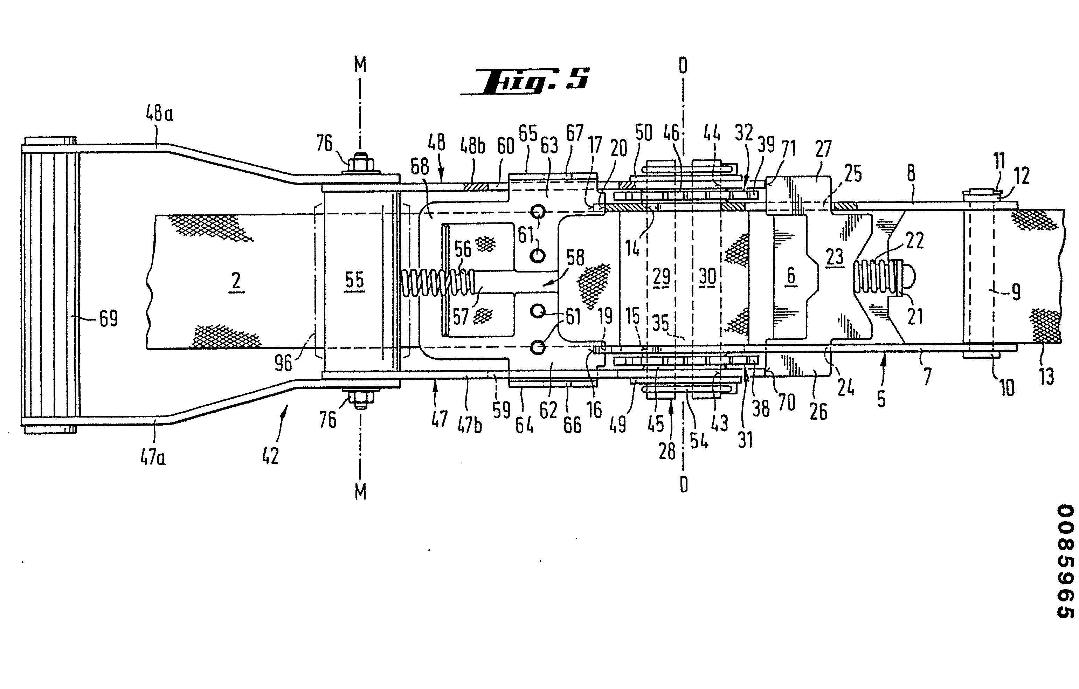

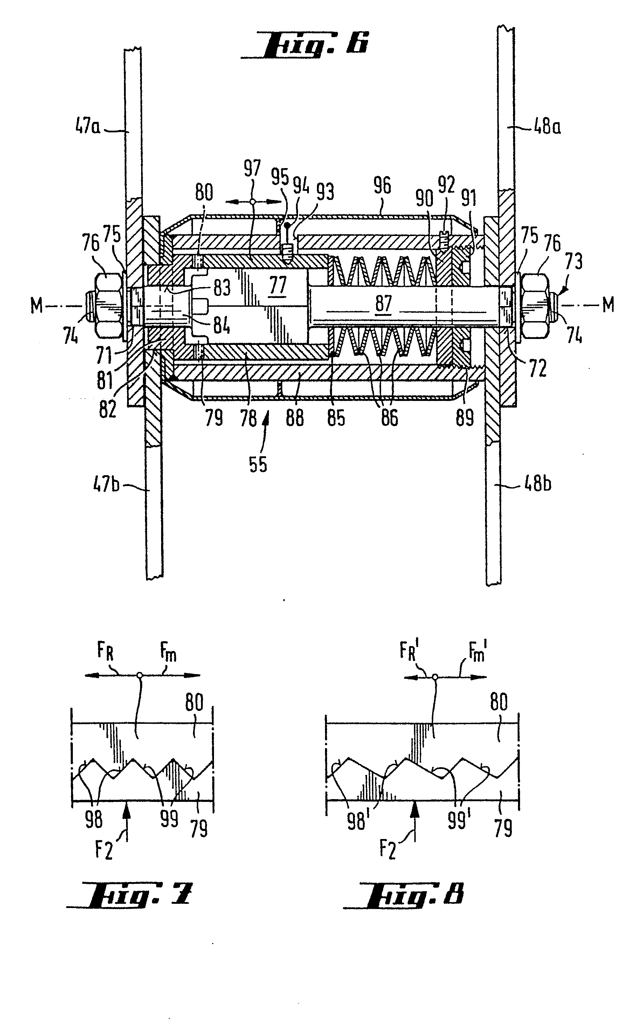

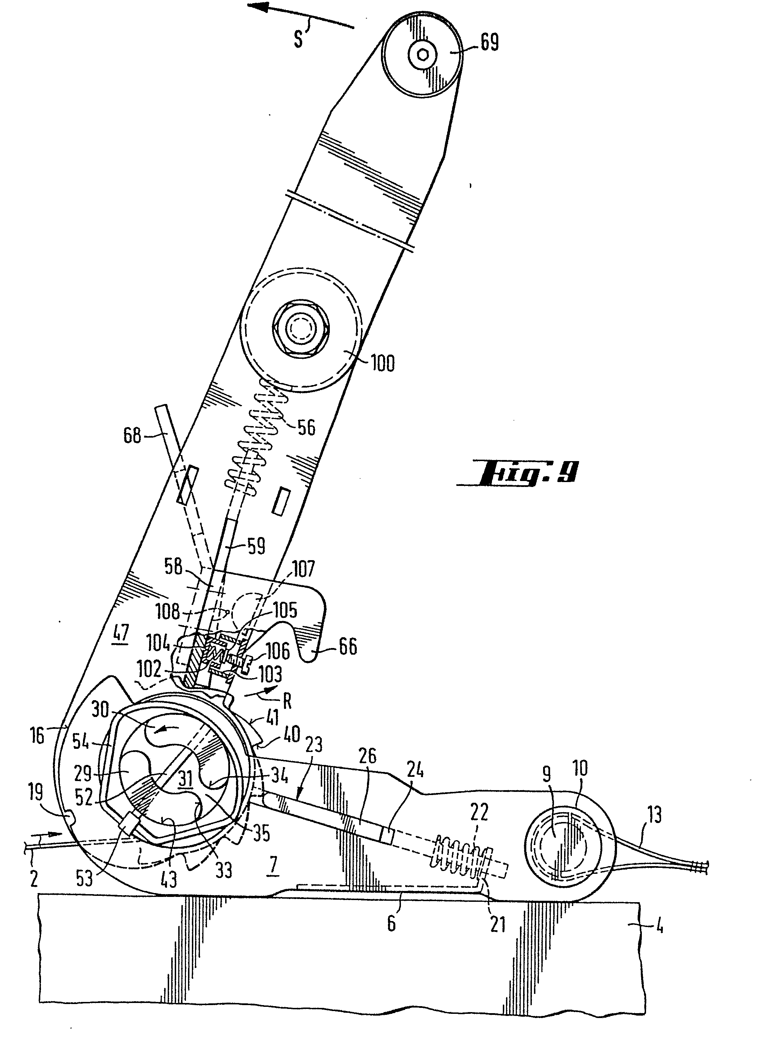

Das dem Verbindungssteg 69 abgekehrte Ende der Schenkel 47, 48 ist als abgerundete Nockenfläche 70, 71 ausgebildet, welche an den äußeren Rändern der flügelartigen Fortsätze 26 und 27 der Sperrklinke 23 angreift und die Sperrklinke aus ihrem Eingriff mit der Zahnung 38 und 39 der Gurttrommel 28 bringt, wenn der Ratschenhebel ausgehend von der in Fig. 3 gezeigten Lage in die in den figuren 4 und 5 gezeigten Lage übergeht. Die Gurttrommel 28 ist dann frei drehbar, wodurch die Spannwirkung aufgehoben ist.

Zu der Querschnittsansicht von Fig. 6 ist der beim Überschreiten eines bestimmten Drehmoments wirksam werdende Mechanismus 55 näher dargestellt. An den dem Handgriff 68 abgekehrten Enden der äußeren Teile 47a und 48a der Schenkel 47 und 48 ist je eine Mehrkantbohrung 71 und 72 angebracht, wobei die beiden Mehrkantbohrungen miteinander fluchten und eine Mittelachse M-M festlegen. Eine Achse 73 verbindet die beiden Mehrkantbohrungen, wobei sie im Bereich derselben eine entsprechende Querschnittsgestalt aufweist. Die äußeren Enden der Achse 73 sind mit einem Gewinde 74 versehen, auf das unter Zwischenlegen von Beilagscheiben 75 Muttern 76 aufgeschraubt sind. In dem Gebiet zwischen den äußeren Teilen 47a und 48a der Schenkel 47 und 48 und angrenzend an diese weist die Achse einen kreisförmigen Querschnitt auf, mit Ausnahme eines aufgeweiteren Bereichs 77, indem sie als Zylinder mit einem quadratischen Querschnitt ausgebildet ist. Auf der Außenfläche des Bereichs 77 und längs derselben verschiebbar ist eine mit einer entsprechenden Innenbohrung versehene Hülse 78 aufgeschoben, die an ihrer aus der Sicht von Fig. 6 linken Stirnseite eine Zahnung 79 trägt. Die Zahnung 79 steht in Eingriff mit einer ihr gegenüberliegenden komplementären Zahnung 80, die am stirnseitigen Ende eines Gegenelements 81 befestigt ist. Das Gegenelement 81 ist in eine Bohrung 82 am freien Ende des inneren Teiles 47b des Schenkels 47 eingesetzt und starr mit diesem verbunden. Das Gegenelement 81 enthält des weiteren eine Durchgangsbohrung 83, durch welche sich das zwischen dem Bereich 77 und dem äußeren Teil 47a des Schenkels 47 verlaufende Stück 84 der Welle 73 hindurcherstreckt. Die Bohrung 73 und die Außenfläche des Stückes 84 bilden eine Schwenkverbindung um die Achse M-M.

Auf dem der Zahnung 79 gegenüberliegenden Ende der Hülse 78 liegt eine Scheibe 85 auf. Auf der Scheibe 85 stützt sich die letzte von einer Reihe von Tellerfedern 86 ab, welche das bis zu dem äußeren Teil 48a des Schenkels 48 reichende mit kreisförmigem Querschnitt versehene Stück 87 der Achse 73 in einem Längsstück umgeben. Eine von dem Gegenelement 81 in ihrer Lage gehaltene Rohrhülse 88 umgibt konzentrisch die Achse, das Gegenelement, die Zahnungen 79 und 80, die Hülse 78, die Scheibe 85 sowie die Tellerfedern 86 und reicht bis an die Innenwand des inneren Teils 48b des Schenkels 48, an dem sie stumpf anstößt. In dem benachbart zum Teil 48b gelegenen Endbereich trägt die Rohrhülse 88 ein Innengewinde 89, in das zwei mit einem Außengewinde versehene Scheiben 90 und 91 einschraubbar sind. Die Scheibe 90, welche gegen die äußerste Tellerfeder drückt, bestimmt durch ihre Lage in dem Innengewinde 89 wie stark die Tellerfedern 86 zusammengedrückt sind. Damit ist deren Vorspannung festgelegt, welche auf die Hülse 78 drückt. Die Scheibe 91 und eine Feststellschraube 92 sichern die jeweils eingenommene Lage.

Die Rohrhülse 88 ist im Bereich der Hülse 78 mit einem Schlitz 93 versehen, der sich über einen Teil ihres Umfangs erstreckt. Durch diesen Schlitz ragt ein an der Hülse 78 über einen dünnen federnden Draht befestigter Klöppel 94 hinaus, der gegen einen nach innen ragenden Fortsatz 95 eines Schallkörpers 96 anschlägt, sobald die Hülse 78 gegen die Kraft der Tellerfedern 86 verschoben wird, was bei Überschreiten eines bestimmten auf dem Ratschenhebel 42 ausgeübten Drehmoments eintritt. Der Schallkörper 96 ist zwischen der Rohrhülse 88 und dem inneren Teil 47b des Schenkels 47 festgeklemmt und erstreckt sich als zylindrisches Gehäuse bis in Nachbarschaft des inneren Teils 48b des Schenkels 48. Durch einen Doppelpfeil 97 ist die Verschiebung der Hülse 78 angedeutet.

Fig. 7 zeigt schematisch ein Ausführungsbeispiel für die in Eingriff stehenden Zahnungen 79 und 80, bei dem die aufsteigenden Zahnflanken 98 und die absteigenden Zahnflanken 99 den gleichen Winkel haben. Der Pfeil F2 bezeichnet die von den Tellerfedern 86 ausgeübte Vorspannung, welche die beiden Zahnungen 79 und 80 gegeneinander preßt. Durch die Pfeile $F_m$ und $F_r$ ist die Kraft angedeutet, die bei einer gegebenen Vorspannung $F_2$ in Richtung dieser Pfeile wirken muß, um die Zahnungen 79 und 80 in Richtung dieser Pfeile gegeneinander zu verschieben. Dies bedeutet, daß der Mechanismus 55 so lange ein von einer Bedienungsperson über den Verbindungssteg 69 auf den Ratschenhebel 42 ausgeübte Drehmomente auf die Gurttrommel 28 überträgt, bis in der jeweiligen Bewegungsrichtung im Bereich der Zahnungen 79 und 80 die Kräfte $F_r$ und $F_m$ erreicht sind. Die Kraft $F_m$ begrenzt dabei das in Spannrichtung S anzuwendende Drehmoment, da nach Überschreiten desselben der Ratschenhebel 42 um die Achse M-M abknickt. Zur Rückstellung des Ratschenhebels 42 in eine Lage, bei der die äußeren Teile 47a und 48a der Schenkel 47 und 48 wieder mit deren hinteren Teilen 47b bzw. 48b fluchten, muß mindestens die Kraft $F_r$ aufgewandt werden, die bei den in Fig. 7 dargestellten Beispiel gleichgroß ist wie die Kraft $F_m$. Die für die Rückstellung benötigte Kraft kann verringert werden wenn wie in Fig. 8 gezeigt, die ansteigenden Zahnflanken 98' steiler sind als die absteigenden Zahnflanken 99' was aus der Länge der entsprechenden Pfeile $F_r'$ und $F_m'$ hervorgeht.

Im Folgenden wird die Wirkungsweise der in den Fig. 1 bis 8 beschriebenen Ausführungsform des Spannschlosses näher erläutert. Hierbei wird von einem Zustand ausgegangen wie er in Fig. 2 dargestellt ist, wobei das freie Ende 37 des Gurtbandes 2 noch nicht zwischen den Zylindern 29 und 30 hindurchgesteckt und auf die Gurttrommel 28 aufgewickelt ist. Durch Anziehen des Handgriffes 68 werden die Haken 66 und 67 aus ihrem Eingriff mit den rückwärtigen Enden der flügelartigen Fortsätze 26 und 27 der Sperrklinke 23 gebracht, so daß der Ratschenhebel 42 anschließend angehoben und nach Einnahme der in Fig. 3 gezeigten Lage in die in den Fig. 4 und 5 gezeigte Lage gebracht werden kann, bei der die Eingriffsenden der Winkelstücke 62 und 63 der Eingriffsklinke 58 in die Nuten 19 und 20 der an den vorderen Enden der U-Schenkel 7, 8 angebrachten Nockenflächen eingreifen. Die Nockenflächen 70, 71 an den inneren Enden des Ratschenhebels 42 bringen dabei die Sperrklinke 23 aus ihrem Eingriff mit der Zahnung 38, 39 der Gurttrommel 28, so daß diese frei drehbar ist. Das freie Ende 37 des Gurtbandes 2 wird anschliessend von unten durch den Spalt 35 zwischen den Zylindern 29 und 30 hindurchgesteckt. Nachdem dies geschehen ist, wird die Eingriffsklinke 58 abermals zurückgezogen und der Ratschenhebel 42 entgegen der Richtung S in seine Ausgangslage zurückgeführt, wobei die Eingriffsflächen der Winkelstützen 62 und 63 über die Zahnflanken 41 gleiten. Sobald die Unterseite der Haken 66 und 67 an den Oberseiten der flügelartigen Fortsätze 26 und 27 anliegen wird diese Bewegung beendet. Bei der Rückführung des Ratschenhebels werden gleichzeitig die Nockenflächen 70 und 71 aus dem Eingriff mit dem flügelartigen Fortsätzen 26 und 27 gebracht, so daß diese in Eingriff mit der Zahnung 38, 39 der Gurttrommel treten und verhindern, daß sich diese bei der Rückführung des Ratschenhebels mitdreht. Der Ratschenhebel 42 wird anschließend wieder in die Spannrichtung S bewegt, wobei die vorderen Ende der Winkelstücke 62 und 63 in Anlage an den Zahnflanken 40 stehen, wodurch die Gurttrommel aus der Sicht der Fig. 2 bis 4 im Gegenuhrzeigersinn gedreht wird. Die Verschiebung des Ratschenhebels in Spannrichtung S wird durch den Anstiegsbereich 18 auf den U-förmigen Schenkeln 7 und 8 begrenzt, indem die Eingriffsbereiche der Winkelstücke dort anzuliegen kommen. Durch wiederholtes Hin- und Herführen des Ratschenhebels 42 zwischen dieser Lage und der Stellung in der die Unterseite der Haken 66 67 an den Oberseiten der flügelartigen Fortsätze 26 und 27 anliegen wird der Spannvorgang fortgesetzt, wobei sich das Gurtband 2, wie in Fig. 2 strichliert angedeutet, um die Gurttrommel 28 herumwickelt. (Bei Durchführung des Spannvorgangs muß selbstverständlich nicht der gesamte Winkelbereich zwischen den beiden vorbeschriebenen Endlagen jeweils ausgenützt werden). Sobald das Gurtband 2 strammgezogen ist, steigt die auf dem Verbindungssteg 69 zum weiteren Spannen auszuübende Kraft an. Sobald diese einen bestimmten Wert überschreitet, d.h. sobald das von dem Ratschenhebel 42 auf die Gurttrommel 28 ausgeübte Drehmoment einen bestimmten Wert überschreitet, knickt der Ratschenhebel 42 um die Achse M-M ab, da in diesem Falle die Kraft $F_m$ überschritten ist, und die Kupplung durch die Zahnungen 79 und 80 zwischen den äußeren Teilen 47a und 48a und den inneren Teilen 47b und 48b der Schenkel 47 und 48 durchrutscht. Da hierbei die Hülse 88 in Richtung des Pfeiles 97 eine Verschiebung erfährt gerät der Klöppel 94 in Schwingungen und schlägt gegen den Fortsatz 95 des Schallkörpers 96, der auf diese Weise das Überschreiten des Drehmoments auch akkustisch anzeigt. Sobald dies geschehen ist wird der Ratschenhebel 42 in die in Fig. 2 gezeigte Lage zurückgeführt und so weit nach unten gedrückt, bis die Haken 66 und 67 rückwärts an den flügelartigen Fortsetzungen 26 und 27 der Sperrklinke 23 einrasten. Wenn die Schlitze 24 und 25 sowie die Schlitze 59 und 60 einen spitzen Winkel miteinander einschließen, wie dies Fig. 2 zeigt, ist es dabei nicht einmal nötig den Handgriff 68 zurückzuziehen da durch die Schließbewegung selbst die Unterseite der Haken 66 und 67 an den Oberseiten der flügelartigen Fortsätze 26 und 27 entlanggleiten bis sie unter deren rückwärtiges Ende gelangen. Anschließend, unter Umständen auch vor der Rückbewegung des Ratschenhebels 42 bringt man die abgeknickten äußeren Teile 47a und 48a wieder in ihre Ausgangslage zurück, so daß sie mit den inneren Teilen 47b und 48b wie in Fig. 2 gezeigt fluchten.

Zum Lösen des Gurtbandes 2 wird das Spannschloß unter Zurückziehen des Handgriffs 68 geöffnet bis die in den Fig. 4 und 5 dargestellte Lage eingenommen ist, wobei durch die Nockenflächen 70 und 71 die Sperrklinke 23 zurückgeschoben wird, so daß sich die Gurttrommel 28 frei drehen und das lose Ende des Gurtbandes herausgezogen werden kann.

Die besonderen Vorteile der vorbeschriebenen Konstruktion sind darin zu sehen, daß eine wirksame Drehmomentbegrenzung stattfindet und daß diese akkustisch angezeigt wird, daß durch ein Ineinandergreifen von Sperrklinke 23 und Eingriffsklinke 58 im Sperrzustande ein versehentliches Öffnen, beispielsweise durch Erschütterungen verhindert wird, sowie daß die Einzelteile des Spannschlosses insgesamt leicht austauschbar sind. Diese Eigenschaften machen seine Verwendung bei erschwertem Einsatzbedingungen besonders geeignet.

Das in Fig. 9 dargestellte Ausführungsbeispiel des Spannschloßes entspricht mit Ausnahme der zur Anwendung kommenden Mittel zur Drehmomentbegrenzung dem vorstehend beschriebenen Beispiel, wobei jedoch in diesem Falle die Schenkel 47 und 48 des Ratschenhebels 42 innerhalb der U-Schenkel 7, 8 und die Kreisscheiben 31 und 32 innerhalb der Schenkel 47 und 48 angeordnet sind und die Eingriffskante der Winkelstücke 62 und 63 seitlich über die Schenkel 47 und 48 in den entsprechenden Schlitzen vorsteht. Die Schenkel 47 und 48 sind des weiteren einstückig ausgebildet und anstelle des Mechanismuses 55 ist lediglich ein die Schenkel 47 und 48 verbindender Steg 100 vorgesehen. Die seitlich in den Schenkeln 47 und 48 angebrachten radial in Richtung auf die Gurttrommel 28 verlaufenden Schlitze 59 bzw. 60 sind jedoch im Gegensatz zu der vorstehend beschriebenen Ausführungsform in ihrem unteren Bereich mit keilförmigen Erweiterungen 101 versehen, welche dazu führen, daß die vorderen Enden der Eingriffsklinke 58 und damit auch deren Eingriffsbereich mit den Zahnungen 38 und 39 der Gurttrommel 28 in Richtung des Pfeiles R derart verschwenkt werden können, daß die Zahnung durchrutscht. Bis zum Ereichen eines bestimmten Drehmoments wird dies dadurch verhindert, daß eine in ihrer Vorspannung einstellbare Feder 102 gegen die Unterseite der Eingriffswinkel 58 drückt und diese in ihrer normalen, in Fig. 9 gezeigten Stellung hält. Die Feder ist in ein Gehäuse 103 aufgenommen, das mit den Schenkeln 47 bzw. 48 des Ratschenhebels 42 verbunden ist. In dem Gehäuse 103 ist längs desselben verschieblich ein Federkäfig 104 geführt, der an der Unterseite der Eingriffsklinke 58 befestigt ist. Die Vorspannung der Feder wird durch eine Platte 105 justiert, die an der Unterseite der Feder anliegt und mittels einer Schraube 106 längs des Gehäuses 103 verschiebbar ist. An den Schenkeln 47 bzw. 48 ist desweiteren ein Schallkörper 107 von einer Glocke befestigt, an welchem ein federnd an der Unterseite der Eingriffsklinke 58 gehaltener Klöppel 108 anschlägt, wenn beim Spannen des Radschnebels 42 die von den Zahnflächen 40 auf den Eingriffbereich der Eingriffsklinke 58 ausgeübte Kraft größer wird als die von der Feder 102 ausgeübte Gegenkraft, durch welche die Eingriffsklinke in Richtung des Pfeiles R wie vorstehend erwähnt verschoben wird.

# DIEHL & KRESSIN

## PATENTANWÄLTE · EUROPEAN PATENT ATTORNEYS

### Zugelassen bei den deutschen und europäischen Patentbehörden

Flüggenstraße 17 · D-8000 München 19

**0085965**

3. Februar 1983

W 1753-EP

Walraf Gurten-Bandweberei GmbH & Co. KG

Dorfbroicher Str. 53-55

4050 Mönchengladbach

---

Spannschloß für Gurtbänder

---

## P a t e n t a n s p r ü c h e

1.    Spannschloß für Gurtbänder, insbesondere für Lastsicherungssysteme, mit einer Befestigung (9) für das Festende (13) des Gurtbandes (2) und mit einer von einer Spannratsche betätigbaren Gurttrommel (28), welche das Gurtband nach dem Windenprinzip spannt und in lösbaren Eingriff mit einer Sperrklinke (23) steht, dadurch g e k e n n z e i c h n e t ,

daß die Spannratsche eine seitlich an der Gurttrommel (28) angebrachte Zahnung (38, 39) enthält, mit der eine am Ratschenhebel (42) befestigte in Richtung auf die Gurttrommel (28) federnd vorgespannte Eingriffsklinke (58) in Wirkverbindung bringbar ist, und daß der Ratschenhebel (42) Mittel (55; 101 bis 106) enthält, welche das auf die Zahnung (38, 39) bei Betätigung des Ratschenhebels (42) übertragbare Drehmoment begrenzen.

2. Spannschloß nach Anspruch 1, dadurch g e k e n n- z e i c h n e t, daß die Eingriffsklinke (58) tangential zur Gurttrommel (28) verschiebbar gelagert und in Spannrichtung (S) tangential zur Gurttrommel (28) federnd vorgespannt ist (Figur 9).

3. Spannschloß nach Anspruch 2, dadurch g e k e n n- z e i ch n e t, daß die Vorspannung zumindest einer Feder (102), mit welcher die Eingriffsklinke (58) tangential zur Gurttrommel (28) vorgespannt wird, einstellbar ist.

4. Spannschloß nach einem der vorstehenden Ansprüche dadurch g e k e n n z e i c h n e t, daß die Dreh- achse (D-D) des Ratschenhebels (42) und der Gurttrommel (28) zusammenfallen.

5. Spannschloß nach einem der vorstehenden Ansprüche, dadurch g e k e n n z e i c h n e t, daß der Ratschen- hebel (42) in Längsrichtung unterteilt ist, und daß die beiden Teile (47a, 47b bzw. 48a, 48b) über einen bei Überschreiten eines vorbestimmten von dem freien Ende (69) des Ratschenhebels (42) ausgeübten Drehmoments ein Abknicken des Ratschenhebels (42) bewirkenden Mechanismus (55) verbunden ist.

6. Spannschloß nach Anspruch 5, dadurch g e k e n n - z e i c h n e t , daß der der Gurttrommel (28) zugekehrte Teil (47b, 48b) des Ratschenhebels (42) zumindest gleich lang, vorzugsweise bis zu 20 % länger ausgebildet ist als das der Gurttrommel (28) abkehr- te Teil (47a, 48a) derselben.

7. Spannschloß nach einem der vorstehenden Ansprüche, dadurch g e k e n n z e i c h n e t , daß der Ratschen- hebel (42) aus zwei quer zur Gurttrommel beabstandeten Schenkeln (47, 48) besteht, die an ihren freien Enden mittels eines Griffes (69) und im Bereich der Unterteilung mittels des Mechanismusses (55) verbunden sind.

8. Spannschloß nach einem der Ansprüche 5 bis 7, dadurch g e k e n n z e i c h n e t , daß der Mechanis- mus (55) eine Achse (73) enthält, die starr mit dem äusseren Teil (47a, 48a) des Ratschenhebels (42) verbunden ist und an einem Bereich (77) einen Mehrkantquerschnitt aufweist, indem sie eine Hülse (78) längsverschieblich aufnimmt, die in eine Richtung vorgespannt ist und an ihrem in Vorspannungsrichtung gelegenen Ende eine Zahnung (79) enthält, welche aufgrund der Vorspannung in Eingriff mit einer entsprechenden gegenüberliegenden Zahnung (80) eines mit dem inneren Teil (47b) des Ratschenhebels (42) starr verbundenen Gegenelements (81) gehalten ist.

9. Spannschloß nach Anspruch 8, dadurch g e k e n n - z e i c h n e t , daß das Gegenelement (81) an dem inneren Teil (47b) des einen Schenkels (47) befestigt ist und eine Rohrhülse (88) trägt, die bis zum gegenüberliegenden Schenkel (48) reicht und eine Feder (86) einschließt, welche die Hülse (78) in Richtung auf das Gegenelement (81) vorspannt.

10. Spannschloß nach Anspruch 9, dadurch g e k e n n -
z e i c h n e t, daß die Feder (86) die Achse (73) umgibt und daß die Rohrhülse (88) an ihrem dem Gegenelement (81) abgekehrten Ende mit einem in ihre Längsrichtung verschiebbaren und arretierbaren Widerlager
(90) für die Feder (86) versehen ist, zwecks Einstellung von deren Vorspannung.

11. Spannschloß nach einem der vorstehenden Ansprüche,
g e k e n n z e i c h n e t durch eine akustische
Anzeige (94, 95, 96; 107, 108), welche bei Überschreiten des eingestellten maximalen Drehmoments betätigt
wird.

12. Spannschloß nach Anspruch 11, dadurch g e k e n n -
z e i c h n e t, daß eine Glocke die akustische Anzeige bildet, welche durch Verschiebung der Hülse (78) betätigbar ist.

13. Spannschloß nach Anspruch 12, dadurch g e k e n n -
z e i c h n e t, daß die Glocke aus einem federnd mit
der Hülse (78) verbundenen Klöppel (94) besteht, der
gegen einen zwischen den Schenkeln (47, 48) des Ratschenhebels (42) angeordneten Schallkörper (96) anschlägt.

14. Spannschloß nach Anspruch 13, dadurch g e k e n n -
z e i c h n e t, daß der Schallkörper (96) den Mechanismus (55) zum Abknicken des Ratschenhebels (42) gehäuseartig umgibt.

15. Spannschloß nach Anspruch 13 oder 14, dadurch
g e k e n n z e i c h n e t, daß der Schallkörper (96)
konzentrisch zur Achse (73) angeordnet ist und ein
radial abstehendes Eingriffselement (95) enthält, das dem Klöppel (94) gegenüberliegt.

16. Spannschloß nach einem der Ansprüche 13 bis 15, dadurch g e k e n n z e i c h n e t, daß der Schallkörper (96) an dem einen Schenkel (47) des Ratschenhebels (42) befestigt ist.

17. Spannschloß nach einem der Ansprüche 8 bis 16, dadurch g e k e n n z e i c h n e t, daß die in Spannrichtung wirksamen Flanken (98') der Zahnung (79, 80) steiler sind als die in Gegenrichtung wirksamen Flanken (99').

18. Spannschloß nach einem der vorstehenden Ansprüche, dadurch g e k e n n z e i c h n e t, daß die Gurttrommel (28) aus zumindest zwei stabförmigen Elementen (29, 30) besteht, die an beiden Enden parallel zueinander in Durchbrüchen von Scheiben (31, 32) derart gehaltert sind, daß ihre Außenflächen einen Kreiszylinder berühren und daß zwischen den Elementen (29, 30) zumindest in dem von den Scheiben (31, 32) begrenzten Bereich ein zwei Mantellinien des Kreiszylinders verbindender Spalt (35) entsteht.

19. Spannschloß nach Anspruch 18, dadurch g e k e n n z e i c h n e t, daß die stabförmigen Elemente (29,30) eine kreiszylindersegmentartige Außenfläche aufweisen und so gehaltert sind, daß diese auf einem Kreiszylinder um die Drehachse (D-D) der Gurttrommel (28) liegen.

20. Spannschloß nach Anspruch 18 oder 19, dadurch g e k e n n z e i c h n e t, daß die Elemente (29,30) aus zwei im Querschnitt kreissegmentartigen und an den Enden abgerundeten Zylindern bestehen, wobei jedes der Segmente bezogen auf die Drehachse (D-D) der Gurttrommel (28) einen Winkel von etwa 140 bis 160°, vorzugsweise 150° einnimmt.

21. Spannschloß nach einem der Ansprüche 18 bis 20, dadurch g e k e n n z e i c h n e t, daß zumindest eine der Scheiben (31, 32) mit der Zahnung (38, 39) versehen ist.

22. Spannschloß nach Anspruch 21, dadurch g e k e n n z e i c h n e t, daß beide Scheiben (31, 32) kreisförmig sind und auf ihrem Rand die Zahnung (38, 39) tragen.

23. Spannschloß nach einem der Ansprüche 18 bis 22, dadurch g e k e n n z e i c h n e t, daß die Außenflächen der stabförmigen Elemente (29, 30) in zwei miteinander fluchtenden quer zur Längsrichtung des Gurtbandes gerichteten Bohrungen (13, 14) eines Rahmens (5) drehbar gelagert sind.
24. Spannschloß nach Anspruch 23, dadurch g e k e n n z e i c h n e t, daß die stabförmigen Elemente (29, 30) außerhalb der Bohrungen (13, 14) durch einen lösbaren Splint (52) gesichert sind.

25. Spannschloß nach einem der Ansprüche 18 bis 24, dadurch g e k e n n z e i c h n e t, daß die Schenkel (47, 48) des Ratschenhebels (42) mit Bohrungen (43, 44) versehen sind, deren Durchmesser dem Durchmesser des von den Außenflächen der stabförmigen Elemente (29, 30) festgelegten Kreiszylinders entspricht, über welche sie um die Drehachse (D-D) der Gurttrommel (28) verschwenkbar auf die stabförmigen Elemente (29, 30) aufgesteckt sind.

26. Spannschloß nach einem der Ansprüche 18 bis 25, dadurch g e k e n n z e i c h n e t, daß die Scheiben (31, 32) außerhalb der Bohrungen (43, 44) im Rahmen (5) und die Schenkel (47, 48) des Ratschenhebels (42) außerhalb der Scheiben (31, 32) auf den stabförmigen Elementen (29, 30) angeordnet sind.

27. Spannschloß nach einem der vorstehenden Ansprüche, dadurch g e k e n n z e i c h n e t , daß der Rahmen (5) aus einem U-Profilblech besteht, das an dem einen Ende zwischen den U-Schenkeln (7, 8) die Befestigung (9) für das Festende (13) des Gurtbandes (2) trägt und an dem entgegengesetzten Ende der U-Schenkel (7, 8) die Bohrungen (43, 44) für die Lagerung der stabförmigen Elemente (29, 30) enthält.

28. Spannschloß nach einem der vorstehenden Ansprüche, dadurch g e k e n n z e i c h n e t , daß der Rahmen (5) mit Nockenflächen (16, 17) versehen ist, welche die Eingriffsklinke (58) des Ratschenhebels (42) nach einer definierten Spannbewegung aus dem Eingriff mit der Zahnung (38, 39) bei einer weiterführenden Verschwenkung in Spannrichtung (S) herausführt.

29. Spannschloß nach einem der vorstehenden Ansprüche, dadurch g e k e n n z e i c h n e t , daß die Eingriffsklinke (58) in Längsschlitzen (59,60) der Schenkel (47, 48) des Ratschenhebels (42) geführt ist, und außen an den Schenkeln (47, 48) herabragende Haken (66, 67) enthält, welche bei geschlossenem Spannschloß hinter der Sperrklinke (23) einrasten und diese in Sperrichtung drücken.

30. Spannschloß nach einem der vorstehenden Ansprüche, dadurch g e k e n n z e i c h n e t , daß die federbelastete Sperrklinke (23) in Längsschlitzen (24, 25) des Rahmens (5) bezüglich der Gurttrommel (28) auf der der Befestigung (9) für das Festende (13) zugekehrten Seite geführt ist und seitlich über den Rahmen (5) vorsteht.

31. Spannschloß nach Anspruch 30, dadurch g e k e n n - z e i c h n e t , daß zumindest ein Schenkel (47, 48) des Ratschenhebels (42) auf seiner bezüglich der Drehachse dem Handgriff abgekehrten Seite mit einer Nockenfläche (70) versehen ist, welche die Sperrklinke (23) aus dem Eingriff mit der Zahnung (38, 39) herhausdrängt, wenn das Spannschloß seine Offen-Endstellung einnimmt.

32. Spannschloß nach einem der vorstehenden Ansprüche, dadurch g e k e n n z e i c h n e t , daß die Eingriffsklinke (58) mit einem Betätigungsgriff (68) versehen ist.

0085965

*Fig. 1*

**Fig. 2**

0085965

*Fig. 3*

Fig. 4

Fig. 5

**Fig. 6**

**Fig. 7**

**Fig. 8**

0085965

*Fig. 9*

Europäisches
Patentamt

**EUROPÄISCHER RECHERCHENBERICHT**

**0085965**
Nummer der Anmeldung

EP 83 10 1072

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | GB-A-2 028 449 (ANCRA)<br><br>* Anspruch 1 *<br><br>--- | 1,2,4, 18,19, 21,22, 27,28, 29 | B 60 P 7/08 |
| A | FR-A-2 443 616 (SPANSET)<br>* Ansprüche 1-5 *<br><br>--- | 1,32 | |
| A | US-A-3 718 315 (EASTERN ROTORCRAFT)<br>* Ansprüche 1,2 *<br><br>--- | 1 | |
| A | FR-A-2 424 152 (BRODERNA HOLMBERGS FABRIKS A.B.)<br>* Ansprüche 1-6 *<br><br>--- | 1 | RECHERCHIERTE SACHGEBIETE (Int. Cl. ³) |
| A | FR-A-2 407 097 (GOTEBORGS BANDVAVERI A.B.)<br>* Ansprüche 1,2 *<br><br>--- | 1 | B 60 P<br>F 16 G<br>B 61 D<br>B 25 B |
| A | US-A-3 749 366 (BRUCKER)<br>* Ansprüche 1-11 *<br><br>----- | 1 | |

Der vorliegende Recherchenbericht wurde für alle Patentansprüche erstellt.

| Recherchenort<br>DEN HAAG | Abschlußdatum der Recherche<br>17-05-1983 | Prüfer<br>SCHMITTER J.M. |
|---|---|---|